Europäisches Patentamt

European Patent Office

Office européen des brevets

(11) Publication number: **0 352 118**
**A1**

## (12) EUROPEAN PATENT APPLICATION

(21) Application number: **89307408.8**

(22) Date of filing: **20.07.89**

(51) Int. Cl.⁵: **F 16 J 15/32**

(30) Priority: **21.07.88 GB 8817413**

(43) Date of publication of application:
**24.01.90 Bulletin 90/04**

(84) Designated Contracting States:
**AT BE CH DE ES FR GB IT LI NL SE**

(71) Applicant: **WOODVILLE POLYMER ENGINEERING LIMITED**
**Alton Lane**
**Ross-on-Wye Herefordshire HR9 5NF (GB)**

(72) Inventor: **Gregory, Christopher**
**3 Hadrian's Way**
**Barnwood Gloucester, GL4 7ED (GB)**

(74) Representative: **Chapple, Colin Richard et al**
**Dowty Group Services Ltd. Patents Dept. Arle Court**
**Cheltenham, Glos. GL51 0TP (GB)**

(54) **Hydrodynamic shaft seals.**

(57) The seal (1) comprises:
- a base section (3) of a first material, for example an elastomer; and - a lining section (4) of a second material, for example PTFE, which forms a sealing contact with a shaft, and which has a series of orifices(5)/indentations formed therein.

The base section (3) and lining section (4) are arranged so that the first material extends into, and fills, the orifices/indentations (5) in the lining section (4) to provide the seal (1) with a smooth, and flush, sealing surface, and provides the shaft seal (1) with a hydrodynamic pumping means (13).

Fig.1

EP 0 352 118 A1

# Description

## HYDRODYNAMIC SHAFT SEALS

This invention relates to hydrodynamic shaft seals, and in particular, a hydrodynamic shaft seal for use as a rotary shaft seal.

The present invention is concerned with providing a simple and cheap form of shaft seal.

In accordance with the present invention a hydrodynamic shaft seal comprises:
- a base section of a first material;
and - a lining section of a second material which forms a sealing contact with a shaft, and which has a series of orifices/ indentations formed in the sealing surface thereof;
wherein the first material extends into, and fills, the orifices/indentations in the lining section to provide the seal with a smooth, and flush, sealing surface, and provides the shaft seal with a hydrodynamic pumping means.

The difference in texture i.e. adhesion and frictional properties, means that in conjunction with the rotation of the shaft a pumping action is induced.

When the shaft seal is assembled about a shaft, the seal is stretched, particularly in the vicinity of the sealing contact area, in order to achieve the required design/sealing configuration with respect to the shaft.

The stretching of the shaft seal causes essentially symmetric distortion and curving, in the axial direction, of the shaft seal sealing surface. The distortion, and curving of the base section of the shaft seal will be greater than in the lining section of the shaft seal.

This distortion and curving causes the base section of the shaft seal to project beyond the face of the lining section of the shaft seal in the area of the orifice/indentation.

The actual sealing contact between, or in close proximity to, the shaft and the above mentioned projections causes the hydrodynamic pumping action on relative rotary motion between the two. This hydrodynamic pumping action will be additionally enhanced by the change in frictional drag exerted on an oil film as the film passes from a low friction surface, for example PTFE, to a relatively higher frictional drag surface, for example the base elastomer of the orifices/indentations.

The orifices/indentations in the lining section may be shaped so that the shaft seal is provided with a unidirectional or a bi-directional pumping action.

Preferably, the orifices/indentations formed in the lining section are of a shape which will provide the shaft seal with a bidirectional pumping action.

Any suitable orifice/indentation shape i.e. either symmetrical or asymmetrical may be adopted, for example, trapeziums (see Dowty Seals Ltd. published applications 2123903A and 2175356A), semicircles, triangles, circles, slots, curved slots etc. These may be formed as a single row or staggered rows. Alternatively a helix or helices may be formed.

The orifices/indentations may be formed in the lining section by any suitable method, for example cutting, stamping, coining or piercing.

In preferred embodiment the base section is moulded so that it adheres to the lining section, and extends into, and fills, the orifices/indentations in the lining section, which lining section may be preshaped prior to the moulding.

The orifices/indentations are, preferably, formed in the lining section so that when in use the pumping means are either in contact with the shaft or in close proximity thereto. In this way the most efficient pumping action for the particular shape of orifice, and therefore pumping means may be utilised.

Preferably, the second material i.e. that of the lining section is polytetrafluoroethylene (PTFE).

Preferably, the first material i.e. that of the base section is an elastomeric material.

In certain cirumstances it is beneficial to provide the shaft seal with an enhanced sealing contact with the shaft. In these circumstances the seal, preferably, also includes a garter spring. The garter spring may be arranged so that it acts against the base section and thereby indirectly against the lining section in order to enhance the sealing contact.

A hydrodynamic shaft seal made in accordance with the present invention can be incorporated in, for example, standard rotary shaft seals, high pressure rotary shaft seals, or unitised rotary shaft seals. These shaft seal constructions may be manufactured so that they incorporate any of the known additional aids, for example, dust lips, protective arrangements.

Normally, with the above type of shaft seal a stiffening ring is provided. Therefore, preferably the shaft seal incorporates a stiffening ring of metal or suitable plastic material.

In particular type of shaft seal arrangement the shaft seal further comprises a unitising member which is placed around the shaft. This type of arrangement provides a unitised shaft seal with all the known advantages such an arrangement provides.

The invention also includes a method of manufacturing a shaft seal in accordance with the present invention, which method comprises:
- preshaping and forming the lining section;
- positioning the lining section in a mould;
and - injection moulding the base section, so that the base section material adheres to, and extends into, and fills, the orifices in the lining section to form hydrodynamic pumping means.

In shaft seals which include a stiffening ring, the method of manufacturing a shaft seal in accordance with the present invention comprises:
- preshaping and forming the lining section, and the stiffening ring;
- positioning the lining section and the stiffening ring in a mould;
and - injection moulding the base section, so that the base section material adheres to, and extends into, and fills, the orifices in the lining section to form hydrodynamic pumping means.

The specifics of the method of manufacture of a shaft seal in accordance with the present invention are those generally known in the industry, and therefore no specific detail thereto is required in appreciating the present invention.

The use of preformed PTFE lining section is, preferred, where the axial length, i.e. length of the shaft seal in the direction of the shaft's axis of rotation is relatively long. This enables any creasing or folding during the manufacturing operation to be eliminated.

The invention will now be illustrated by way of description of several examples shown in the accompanying drawings, in which:

Figure 1 shows a cross-section view of a first embodiment of a shaft seal made in accordance with the present invention;

Figure 2 shows a cross-section view of a second embodiment of a shaft seal made in accordance with the present invention;

Figure 3 shows a cross-section view of a third embodiment of a shaft seal made in accordance with the present invention;

Figure 4 shows cross-section view of a fourth embodiment of a shaft seal made in accordance with the present invention;

Figure 5 shows a cross-section view of a fifth embodiment of a shaft seal made in accordance with the present invention;

Figure 6 shows a cross-section view of a sixth embodiment of a shaft seal made in accordance with the present invention;

and Figure 7A to 7C, illustrate alternative pumping means which may be incorporated into a shaft seal made in accordance with the present invention.

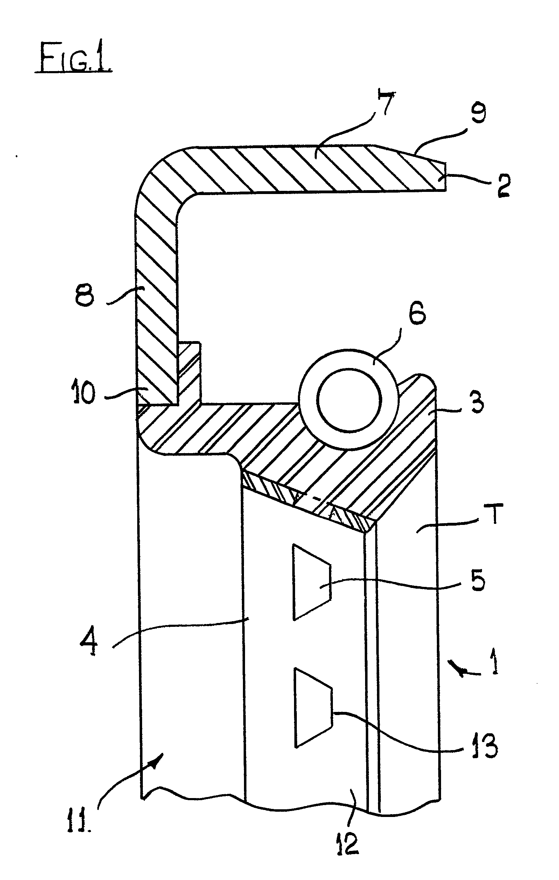

Now referring to Figure 1 of the drawings, a first embodiment of a hydrodynamic shaft seal 1 made in accordance with the present invention comprises:
- a stiffening ring 2;
- a base elastomeric section 3;
- a PTFE lining section 4 having orifices 5, formed therein;
and - a garter spring 6.

The stiffening ring 2 may be made from metal or suitable plastics material, and is of a generally L-shaped configuration having a first arm 7 and a second arm 8. The first arm 7 is provided with a chamfered section 9, to aid the mounting of the seal about a shaft in a suitable body. The second arm 8 is attached to the base elastomeric section 3 at an end 10 thereof.

The PTFE lining section 4 is of generally conal shape, and has a passage 11 passing therethrough. At the narrow end of the PTFE lining section 4 the lining section 4 and the base elastomeric section 3 are trimmed to provide a trimmed surface T.

In use a rotating shaft (not shown) may be passed through the passage 11, so that a surface 12 of the PTFE lining section 4 can provide a sealing contact therewith.

The orifices 5 in the PTFE lining section 4 are cut therein, and are trapezium shaped so as to provide the seal with a bidirectional hydrodynamic pumping means 13.

The base elastomeric section 3 is formed so that it is bonded to the end 10 of the second arm 8 of the stiffening ring 2 and the garter spring 6 and is bonded to the PTFE lining section 4, so that the seal is held together as a single unitary member.

The garter spring 6 is assembled and positioned so that it acts against the base elastomeric section 3, and thereby the PTFE lining section 4, so as to enhance the sealing contact between the surface 12 of the PTFE lining section 4 and a shaft which extends through the passage 11.

The shaft seal is manufactured using the following steps:
- preshaping and forming the stiffening ring 2 and the PTFE lining section 4;
- preparing, placing and appropriately positioning the stiffening ring 2, the PTFE lining section 4 in a mould;
and - injection moulding the base elastomeric section 3.

In the moulding of the base elastomeric section 3, the elastomeric material is caused to adhere to the end 10 of the second arm 8 of the stiffening ring 2, as well as being bonded to the PTFE lining section 4.

Further, the base elastomer extends into and fills the orifices 5 in the PTFE lining section 4, so that it forms a smooth and flush surface with the surface 12 of the PTFE lining section 4. This provides the bi-directional pumping means 13 of the shaft seal 1.

In use the shaft seal 1 is placed about a shaft so that the shaft extends through the passage 11 and the surface 12 is contact with the surface of the shaft. The pumping means 13 are, at least, partially in contact or alternatively in close proximity with the shaft. Therefore, as the shaft rotates the difference in the surface adhesion/friction qualities between the PTFE, and the base elastomer causes a pumping action to be induced.

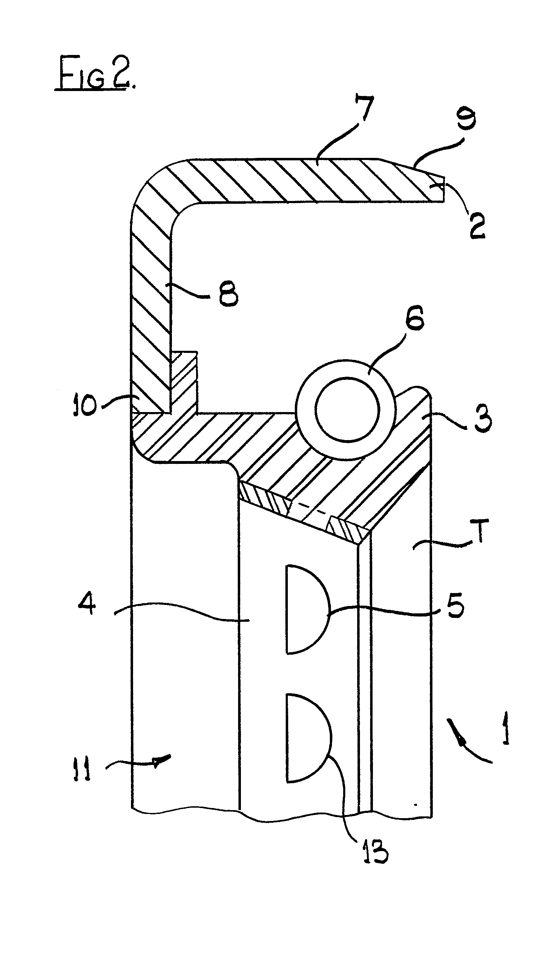

Now referring to Figure 2 of the drawing a second type of hydrodynamic shaft seal 1 is shown, this shaft seal 1 is essentially identical to that described above, and like numerals have been used to illustrate like components.

The only difference between the two forms of shaft seals resides in the fact that in the second form, that of Figure 2, the orifice 5, and therefore the pumping means 13 are semicircular in shape and not trapezium.

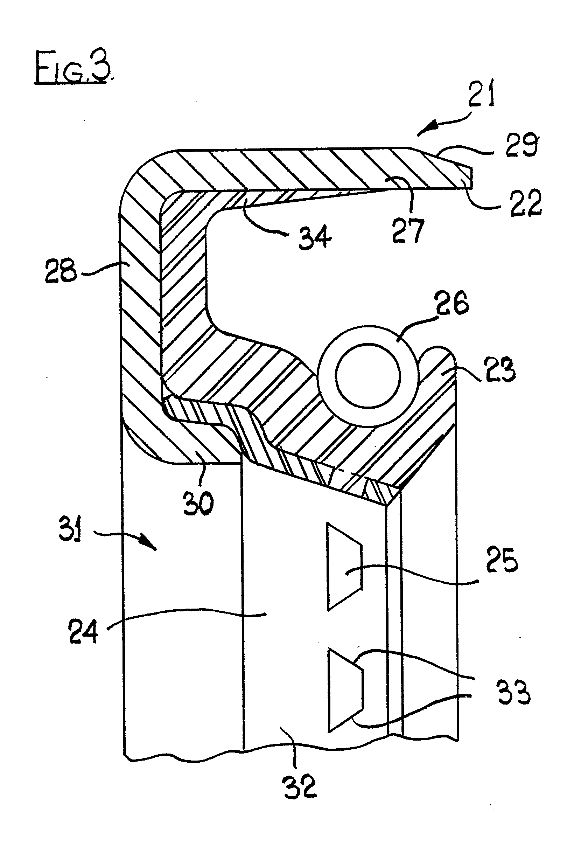

Now referring to Figure 3 of the drawings, a third type of shaft seal is shown. This type of shaft seal is particularly suited for use as a high pressure shaft seal.

The shaft seal 21, shown in Figure 3, comprises:
- a stiffening ring 22;
- a base elastomeric section 23;
- a PTFE lining section 24 having orifices 25 formed therein;
and - a garter spring 26.

The stiffening ring 22 may be made from metal or suitable plastics material, and is of generally L-shaped configuration having a first arm 27, and a second arm 28. The first arm 27 has a chamfered section 29, to aid with the mounting of the seal about a shaft in a suitable body. The second arm 8 is in contact with the PTFE lining section 24 by means of an upturned end 30 thereof.

The PTFE lining section 24 is of a generally conal configuration and has a passage 31 running therethrough. When positioned the PTFE lining section 24 is in contact with, but does not adhere to, the upturned end 30 of the second arm 28 of the stiffening ring 22.

When, in use, a rotating shaft not shown may be passed through the passage 31, so that a surface 32 of the PTFE lining section 24 is in sealing contact with the shaft.

The orifices 25 cut in the PTFE lining section 24 may be any suitable shape, however, in this particular example, they are trapeziums. This provides the seal with a bidirectional pumping means 33.

The base elastomeric section 23 is formed so that it is bonded to the second arm 25 of the stiffening ring 22 but not the upturned end 30 thereof, the first arm 27 by means of upstanding section 34, and in contact with the garter spring 26, with the PTFE lining section 24 being bonded thereto. In this way the seal 21 is held together as a single unit.

As with the previously described seals, the garter spring 26 is positioned so that it acts against the base elastomeric section 23, and thereby the PTFE lining section 24, so as to enhance the sealing contact between the surface 32 of the PTFE lining section 24 and a shaft which extends through the passage 31.

The method of manufacture of this shaft seal is essentially identical to that described earlier for the previously described seals. Again the base elastomeric section 3 is moulded so that the elastomeric material extends, and fills, the orifices 25 in the PTFE lining section so as to provide the necessary bidirectional pumping means 33.

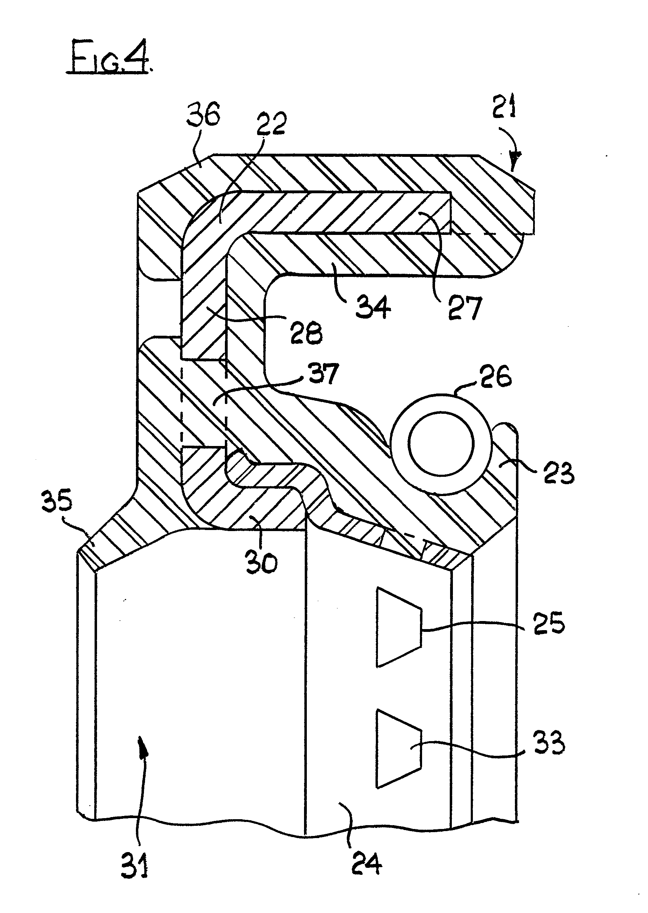

Now referring to Figure 4 of the drawings, a fourth embodiment of shaft seal is shown. This shaft seal is again a shaft seal suitable for use at high pressure, and is similar to that described with reference to Figure 3 of the drawings. Hence like numerals have been used to designate like components.

The only differences between the shaft seals shown in Figure 3 and Figure 4, resides in, or pertains from, the fact that a dust lip 35 and protector 36 are provided.

In the shaft seal 21 shown in Figure 4, the base elastomeric section 23 is moulded in a single operation so that:
- the upstanding section 34 extends and completely encapsulates the first arm 27 of the stiffening ring 22 and, thereby form the protector 36;
and - it forms a dust lip 35 which circumferentially surrounds the passage 31.

In order to ensure/assist with the flow of elastomeric material during moulding of the base elastomer section 23, a series of holes 37 are provided in the second arm 28 of the stiffening ring 22. If this was not the case the moulding of the dust lip, in particular, would be more complex.

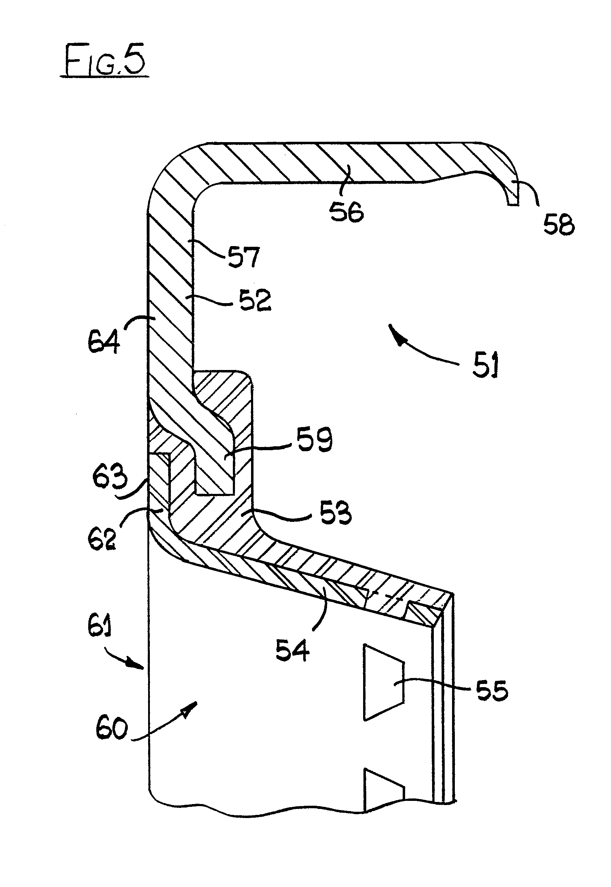

Now referring to Figure 5 of the drawings, an alternative construction of standard shaft seal is shown. This type of shaft seal is relatively simple and cheap to produce.

In accordance with the design illustrated, a shaft seal 51 comprises:
- a stiffening ring 52,
- a base elastomeric section 53,
and - a PTFE lining section 54, having orifices 55 formed therein.

The stiffening ring 52 is made from a metal or suitable plastic material and is of a generally L-shaped configuration, having a first arm 56 and a second arm 57. The first arm 56 is formed with a reduced thickness hook section 58 at one end thereof. The second arm 57 is formed with an offset end portion 59.

The PTFE lining section 54 is of a generally conal shape having a passage 60 passing therethrough. When the shaft seal is in the assembled form, the end 61 of greater diameter of the PTFE lining section is deformed to form a skirt member 62, whose inner surface 63 is generally flush with the outer surface 64 of second arm 57 of the stiffening ring 52.

The base elastomeric section 53 interconnects the stiffening ring 52 via the offset end portion 59, and the PTFE lining section 54 and, thereby, holds the shaft seal together as a single unit. The PTFE lining section 54 is in fact bonded to the base elastomeric section 53.

The method of assembly of the shaft seal is basically the same as for the previously described shaft seals.

In this case the base elastomeric section 53 of the shaft seal 51 is moulded so that it encapsulates the offset end portion 59 of the second arm 27 of the stiffening ring 52, as well as entering, and filling the orifices 55 to provide the seal with pumping means 64.

The orifices 55 cut into the PTFE lining section 54 may be any suitable shape, however, in this particular example they are trapeziums.

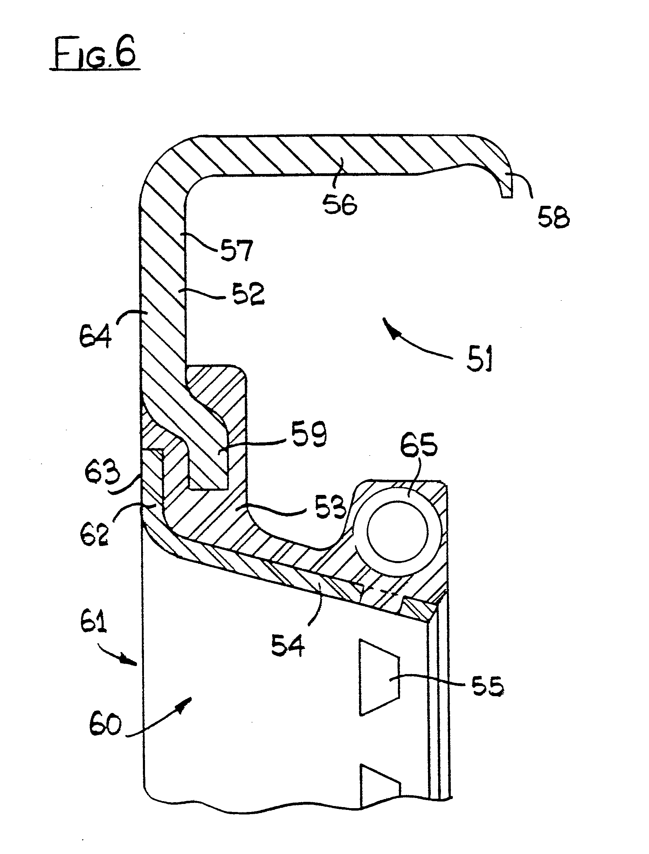

Now referring to Figure 6, the shaft seal shown in this Figure is essentially identical with that shown in Figure 5. Hence, like numerals have been used to describe like components.

The only difference between the shaft seals shown in Figures 5 and 6 is that a garter spring 65 is encapsulated in the base elastomeric section 53.

This garter spring 65 is used to enhance the sealing contact between inner surface 63, the sealing surface, and the shaft as it rotates.

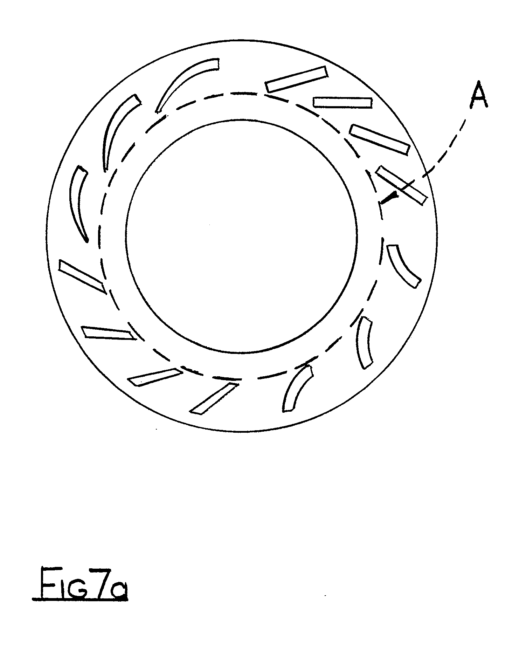

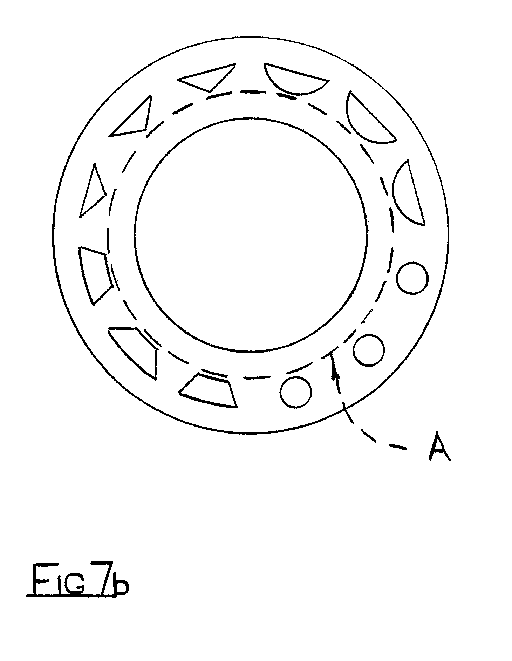

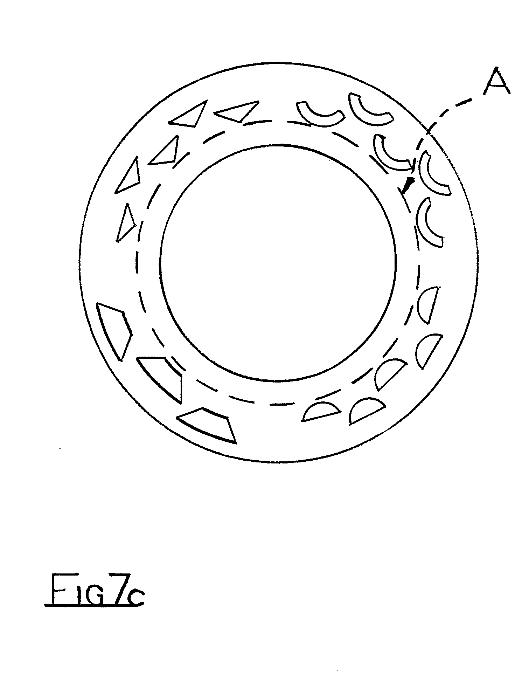

As described earlier any suitable pumping means, unidirectional or bidirectional may be formed in the shaft seal by through moulding in accordance with the present invention. Figures 7A to 7C, illustrate several possible pumping means which may be formed in the PTFE lining section, in accordance with the present invention. In each of the Figures the approximate position of the sealing contact line is indicated by the line A.

Figure 7A shows four forms of slot like orifices in the PTFE lining section. These forms of orifices provide the seal with unidirectional pumping means only. The direction of rotation of the shaft to cause pumping for which is dictated by the direction of the slots, which may be reversed.

Figure 7B shows four forms of orifices in the PTFE lining section, which will provide the seal with a bidirectional pumping action. In this case the apertures are formed in a single series.

Figures 7C shows four forms of orifices in the PTFE lining section, which will again provide the seal with a bidirectional pumping. In this case the apertures are formed in a staggered series.

**Claims**

1. A hydrodynamic shaft seal comprises:
- a base section of a first material;
and - a lining section of a second material which forms a sealing contact with a shaft, and which has a series of orifices/indentations formed in the sealing therein;
wherein the first material extends into, and fills, the orifices/indentations in the lining section to provide the seal with a smooth, and flush, sealing surface, and thereby provides the shaft seal with a hydrodynamic pumping means.

2. A hydrodynamic shaft seal as claimed in claim 1, in which the orifices/indentations formed in the lining section are of a shape which will provide the shaft seal with a bi-directional pumping action.

3. A hydrodynamic shaft seal as claimed in claim 1 or claim 2, in which the orifices/indentations formed in the lining section are formed in a single row or staggered rows.

4. A hydrodynamic shaft seal as claimed in claim 1 or claim 2, in which the orifices/indentations are in the form of a helix or helices.

5. A hydrodynamic shaft seal as claimed in any one of the preceding claims, wherein the base section is moulded so that it adheres to the lining section, and extends into, and fills, the orifices/indentations in the lining section, which lining section may be preshaped prior to the moulding.

6. A hydrodynamic shaft seal as claimed in any one of the preceding claims, wherein the orifices/indentations are formed in the lining section so that when in use the pumping means are either in contact with the shaft or in close proximity thereto.

7. A hydrodynamic shaft seal as claimed in any one of the preceding claims, wherein the second material is polytetrafluoroethylene (PTFE).

8. A hydrodynamic shaft seal as claimed in any one of the preceding claims, wherein the seal also includes a garter spring.

9. A hydrodynamic shaft seal as claimed in any one of the preceding claims, wherein the seal has a stiffening ring of metal or plastics material.

10. A method of manufacturing a hydrodynamic shaft seal as claimed in any one of the preceding claims which method comprises:
- preshaping and forming the lining section;
- positioning the lining section in a mould;
and - injection moulding the base section, so that the base section material adheres to, and extends into, and fills, the orifices in the lining section to form hydrodynamic pumping means.

11. A method as claimed in claim 10, which further comprises:
- preshaping and forming the lining section and the stiffening ring;
- positioning the lining section and the stiffening ring in a mould;
and - injection moulding the base section, so that the base section material adheres to, and extends into, and fills, the orifices in the lining section to form hydrodynamic pumping means.

Fig.1

FIG 2.

Fig.3.

Fig.4.

# FIG.5

# FIG.6

A

Fig 7a

FIG 7b

Fig 7c

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| E | WO-A-8 902 998 (FEDERAL-MOGUL) <br> * Page 8, line 1 - page 14, line 29; figures 1-17 * | 1-3,5-11 | F 16 J 15/32 |
| Y | GB-A-2 065 797 (C. FREUDENBERG) <br> * Whole document * | 1,2,4-7,9 | |
| Y | DE-B-1 262 707 (KUPFER-ASBEST) <br> * Whole document * | 1,5,7-9 | |
| A | CH-A- 578 137 (ELASTOFLON) <br> * Whole document * | 1,4,7 | |
| A | EP-A-0 113 663 (FEDERAL-MOGUL) <br> * Page 4, line 23 - page 9, line 11; figures 1-4 * | 1,5,7-11 | |

| | |
|---|---|
| | TECHNICAL FIELDS SEARCHED (Int. Cl.5) |
| | F 16 J |

The present search report has been drawn up for all claims

| Place of search | Date of completion of the search | Examiner |
|---|---|---|
| THE HAGUE | 27-10-1989 | LEGER M.G.M. |